(19) Europäisches Patentamt
European Patent Office
Office européen des brevets

(11) **EP 2 149 690 A2**

(12) **EUROPEAN PATENT APPLICATION**

(43) Date of publication:
03.02.2010 Bulletin 2010/05

(51) Int Cl.:
*F02C 7/36* (2006.01)　　*F01D 5/02* (2006.01)
*F01D 5/06* (2006.01)

(21) Application number: **09166749.3**

(22) Date of filing: **29.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **31.07.2008 JP 2008197171**

(71) Applicant: **Hitachi Ltd.**
**Tokyo 100-8280 (JP)**

(72) Inventors:
• **Nishioka, Eiji**
**Tokyo 100-8220 (JP)**

• **Arai, Masahiko**
**Tokyo 100-8220 (JP)**
• **Hiruta, Ryusuke**
**Tokyo 100-8220 (JP)**
• **Doi, Hiroyuki**
**Tokyo 100-8220 (JP)**

(74) Representative: **Erny, Tobias**
**MERH-IP**
**Matias Erny Reichl Hoffmann**
**Paul-Heyse-Strasse 29**
**80336 München (DE)**

(54) **Turbine rotor**

(57)　　An object of the present invention is to provide a turbine rotor with high reliability of strength. The turbine rotor includes two rotors (61, 62) which are connected at the butted portions of the rotors (61, 62) via a weld (6) without forming penetration beads. Specifically, the turbine rotor includes a rotor (61) for low pressure, a rotor (62) for high pressure, and a center hole (64) formed at a center portion of the turbine rotor. The rotors (61, 62) for low pressure and for high pressure are integrated together into a steam turbine rotor by welding respective ends of the rotors (61, 62) to each other. The respective ends of the rotors (61, 62) are in contact with each other via at least two contact faces (31, 32, 33) in a radial direction and an axial direction of the turbine rotor. At least parts of the respective ends are welded together.

# FIG. 1

EP 2 149 690 A2

## Description

FIELD OF THE INVENTION

The present invention relates to turbine rotors.

BACKGROUND OF THE INVENTION

With the growing concern about environmental problems, steam turbine power plants have been required to have higher efficiency and higher output capacity by increasing the temperature and pressure of steam. Properties required for material of a steam turbine rotor are appropriate high-temperature cheep rupture strength at high pressure (high temperature), and appropriate tensile strength and toughness at low pressure (low temperature). However, it is difficult for only one material to satisfy both properties for high pressure and low pressure. Thus, the following method has been know. The steam turbine rotor is divided into a plurality of stages, each of which is made of an optimal rotor material. The respective stages are connected together by bolt fastening, welding, or the like, to form one rotor.
A weld type turbine rotor, constructed by welding, has a structure with a cavity sealed at the center of the rotor in assembling rotors so as to reduce stress at start-up. The turbine rotor formed by welding allows weld metal to penetrate up to a rotor center hole, thereby to form a penetration bead. Since the inside of the rotor center hole is air atmosphere which cannot be substituted by inert atmosphere, back shield for preventing oxidation cannot be applied. When welding is performed by introducing a welding torch from an outer peripheral side, the weld metal reacts with air in the center hole, so that the penetration beads are excessively oxidized. The shape of the penetration beads excessively oxidized becomes irregular, which may largely differ from that indicated by a design drawing, causing flaws in some cases.
When not inspecting the shape of such penetration beads formed at the center hole of the rotor, the turbine rotor does not become a desired one from the viewpoint of the reliability of strength. Japanese Unexamined Patent Publication No. 2000-64805, Japanese Unexamined Patent Publication No. Hei 9-108883, and Japanese Unexamined Patent Publication No. 2000-186509 have proposed that an inspection hole penetrating from the outer periphery of the rotor up to the center hole is provided for inspecting the formed penetration beads, and that a radiographic test (RT) or a visual test (VT) is performed by inserting a radiation source or a camera into the center hole.
In order to prevent flaws of the penetration beads, it is also proposed that a through hole for gas charging is provided at the center hole and a back shield is introduced in the through hole.
A rotor provided with the through hole as described above may receive concentrated stress during the rotation, which is undesirable from the viewpoint of the strength maintenance and the reliability of the rotor. An object of the present invention is to provide a welded rotor which is welded without forming the penetration beads. As a result, this eliminates the necessity of inspection of the shape of penetration beads of the welded rotor, improving the reliability of strength of a weld.

SUMMARY OF THE INVENTION

The present invention relates to a steam turbine rotor including a rotor for low pressure and a rotor for high pressure which are integrated by connecting at least parts of the rotors to each other via a weld including weld metal. The turbine rotor of the present invention, which is to solve the above-mentioned problems, includes the rotor for low pressure and the rotor for high pressure which are in contact with each other via at least two contact faces in a radial direction and/or an axial direction of the turbine rotor in integrating the rotors by welding the respective ends of the rotors. Preferably, the at least two contact faces in a radial direction and/or an axial direction of the turbine rotor comprise at least one contact face in a radial direction and at least one contact face in an axial direction.
At least a part of the weld is desirably located on a contact face in the axial direction. Preferably, at least one of the contact faces in the radial direction is located on a lower pressure side with respect to a center line of a welding groove. Further, the length of at least one of the contact faces in the radial direction is preferably in a range of 0.5 to 2.0 mm. At least one of the contact faces in the axial direction desirably has an end located on a lower pressure side with respect to the center of the welding groove. Preferably, at least one of the contact faces in the axial direction desirably has an end located on a higher pressure side with respect to at least one of the contact faces in the radial direction.
The turbine rotor preferably has a center hole formed at a center portion of the turbine rotor.
The present invention eliminates the necessity of inspecting the flaws and shape of the penetration beads, improving the reliability of the weld.

BRIEF DESCRIPTION OF THE DRAWING

Fig. 1 is a sectional view of a welded rotor for a high and low pressure turbine in Example 1 of the present invention;

Fig. 2 is a partial sectional view of a weld joint of the turbine rotor according to the present invention;

Fig. 3 is a schematic diagram of a welding machine for welding the turbine rotors;

Fig. 4 is a flowchart showing a welding procedure for the turbine rotor in Example 1 of the present invention;

Fig. 5 shows an example of a flowchart of a welding procedure by a conventional method in a case where a buttering layer is formed;

Fig. 6 is a schematic diagram showing the vicinity of a weld before welding;

Fig. 7 shows an example of the result of a material strength test of the weld joint;

Fig. 8 shows an example of the result of calculation of a load stress on a contact face;

Fig. 9 is a schematic diagram showing the vicinity of the weld after welding in Example 1 of the present invention;

Fig. 10 shows an example of the result of examination of a relationship between the amount of heat input and a penetration depth;

Fig. 11 is a schematic diagram of butted portions in Example 1 of the present invention;

Fig. 12 is a flowchart showing a procedure and a physical phenomenon in welding the butted portions together according to the present invention;

Fig. 13 is an enlarged schematic diagram showing the vicinity of the contact face according to the present invention;

Fig. 14 is a schematic diagram of butted portions in Example 2 of the present invention;

Fig. 15 is a schematic diagram of butted portions in Example 3 of the present invention;

Fig. 16 is a schematic diagram of butted portions in Example 4 of the present invention;

Fig. 17 is a schematic diagramof butted portions in Example 5 of the present invention;

Fig. 18 is a sectional view of a welded rotor for a high and low pressure turbine in Example 8 of the present invention;

Fig. 19 is a sectional view of another welded rotor for a high and low pressure turbine in Example 8 of the present invention;

Fig. 20 is a sectional view of a further welded rotor for a high and low pressure turbine in Example 8 of the present invention;

Fig. 21 is a schematic diagram of butted portions in Example 9 of the present invention;

Fig. 22 is a schematic diagram of other butted portions in Example 9 of the present invention; and

Fig. 23 is a schematic diagram of other butted portions in Example 9 of the present invention.

## DETAILED DESCRIPTION OF THE PREFERRED EMBODIMENTS

For a conventional integrated rotor, material used for a high and intermediate pressure steam turbine, a steam temperature of 538 to 600°C, is 1% Cr-Mo-V steel or 12% Cr steel (see Japanese Patent Publication No. 1833108 or ASTM A470 Class 8). Material used for a low pressure steam turbine, a steam temperature of 400°C or less, is 3 to 4% Ni-Cr-Mo-V steel (see ASTM A470 Class 7). Material used for a high and low pressure integrated rotor, which includes rotor components from the high pressure to the low pressure integrally formed of the same material at a steam temperature of 538 to 566 °C, is 2% Ni-2% Cr-Mo-V steel (see Japanese Patent Publication No. 3106121). These rotors are not suitable for further increasing temperature and capacity.

A turbine rotor of the present invention is formed by connecting a plurality of members together into which a rotor material is divided. Properties required for rotor materials of the large-sized steam turbine rotor are appropriate high-temperature creep rupture strength at high pressure (high temperature), and appropriate tensile strength and toughness at low pressure (low temperature). Each stage of the turbine rotor requires different properties. Further, it is difficult for only one material to satisfy both properties for high and low pressures required for the rotor material of the large-sized steam turbine rotor. When the turbine rotor is produced using ingots made of different materials, a high-quality steel ingot can be obtained in a remelting step of a manufacturing process of the rotor, and large manufacturing equipment is not required, as compared to a manufacturing process of the large-sized rotor. The following method has been known. An optimal rotor material is selected for every stage or stages to form one or more stages of the rotor. The respective rotor stages are connected together by bolt fastening, weld bonding, or the like to form one rotor.

Japanese Examined Patent Application Publication No. Sho 56-14842 discloses a method for manufacturing a turbine rotor which involves connecting small steel ingots for every stage or stages of a turbine rotor. A turbine rotor including one or more rotor stages connected together by welding is disclosed in Mitsubishi Heavy Industries Technical Review, Vol. 37, No. 3 (2000-5).

The turbine rotor of the present invention has a center hole in the rotor member. The turbine rotor formed by welding one or more rotor stages allows weld metal to penetrate up to a rotor center hole to forms penetration bead. Since the rotor center hole is sealed in assembly of the rotor, the inside of the rotor center hole remains under air atmosphere, not substituted by inert atmosphere. When welding is performed in this state by introducing a weld torch from an outer peripheral side, the weld metal reacts with air in the center hole, so that the penetration beads are excessively oxidized. The shape of the penetration beads excessively oxidized becomes irregular, which may largely differ from that indicated by a design drawing. In order to prevent such a situation, a hole is provided in a welding groove for charging inert gas into the center hole of the rotor (see Fuji Electric Journal, Vol. 77, No. 2 (2004)). However, it takes a great effort to seal the hole provided in the welding groove during a welding step. Further, even if penetration beads are formed by such a prevention means, the soundness of shape, that is, the conformance to the designed shape, should be examined after the welding step. Normal inspection methods include a penetrant test (PT) for the surface of a weld, and an ultrasonic test (UT) for the inside of the weld. These tests, however, cannot be applied to inspection of the shape of penetration bead because the main purposes of the tests are inspection of flaws and measurement of the flaw size. A radiographic test (RT) and a visual test (VT) can inspect the shape of the penetration bead. These tests, however, need to introduce a radiation source or a camera into the center hole.

It is also proposed that an inspection hole is provided in the rotor to penetrate from the outer periphery up to the center hole. However, the provision of a through hole in the rotor is undesirable from the viewpoint of the reliability of strength. It is also undesirable, from the viewpoint of the reliability of strength, not to inspect the shape of the penetration beads formed at the center hole of the rotor.

The inventors have studied about a method for securing the reliability of strength of a weld without forming any penetration bead, whose shape needs to be inspected. For example, when butted portions in mating shape are welded as disclosed in Japanese Examined Patent Application Publication No. Hei 06-78721, the amount of heat input in welding is adjusted so that a penetration depth does not penetrate the butted portion to avoid formation of the penetration beads. A preliminary test, performing welding while adjusting the amount of heat input, showed a result that weld metal was spouted during the welding and sound weld could not be formed. The reason for this is presumed that air remaining in the sealed center hole was expanded with the increasing temperature in inputting heat for welding, and spouted the weld metal in a melted state. Therefore, only the definition of shape of the butted portions before welding is insufficient to form sound butted portions.

Then, the penetration states of the butted portions after welding have been studied. For example, Japanese Unexamined Patent Publication No. 2005-344527 discloses that the butted portions obtained after welding have an oblique or zigzag shapes. Japanese Unexamined Patent Publication No. 2001-123801 discloses that the butted portions obtained after welding keep the mating shapes provided before welding. Any of the shapes is designed for the purpose of positioning of the rotor in assembly, that is, reducing an eccentricity of the rotor in rotation, and has only a small effect of preventing the weld metal from spouting in the root pass welding. As a result of the preliminary test, the butted portions with such shapes cannot always prevent the spouting of the weld metal in the root pass wending.

Taking into consideration the abode-mentioned circumstances, the inventors have studied about means for enhancing the reliability of strength of the turbine rotor, which is constructed by coupling the butt portions of rotors via the weld without forming any penetration bead in the turbine rotor. As a result, the spouting of weld metal is eliminated in the root pass welding, and the through hole passing from the outer periphery to the center hole is not also provided, which can improve the reliability of strength. Further, an inspection step of the shape of penetration beads is not necessary, which can shorten a manufacturing process.

In the present invention, a rotor for low pressure and a rotors for high pressure are in contact with each other via at least two faces in a radial direction and in an axial direction, respectively, around a center hole part. At least parts of the contact faces are welded and integrated together to form a turbine rotor.

For example, the rotor for high pressure is provided with stepped portions at a contact end face with the rotor for low pressure. The stepped portions are, from the outside, a parallel surface, a vertical surface, and another parallel surface to the radial direction of the rotor. The rotor for low pressure is also provided with stepped portions corresponding to engage with those of the rotor for high pressure. Thus, at least two surfaces parallel to the radial direction are provided on the contact faces, and the contact faces located in the outermost position are welded. The welding may be performed so as to cover the entire contact faces on the outermost side, or so as not to cover the entire contact faces. As a result, the contact faces parallel to the radial direction of the rotor are discontinuous, whereby no penetration bead is formed. The spouting of air in the center hole is also prevented.

The inner part of the surfaces parallel, to the radial direction is preferably located closer to the rotor for low pressure than the outer one (that is, the surface parallel to the axial direction of the rotor preferably extends toward the rotor for low pressure than the weld). The surface parallel to the radial direction of the rotor is preferably parallel to the radial direction of the rotor to the greatest extent practicable from the viewpoint of design. The surface parallel to the axial direction of the rotor may not be strictly parallel to the axis of the rotor.

Now, turbine rotors in accordance with preferred embodiments of the present invention will be described below in detail with specific examples.

[Example 1]

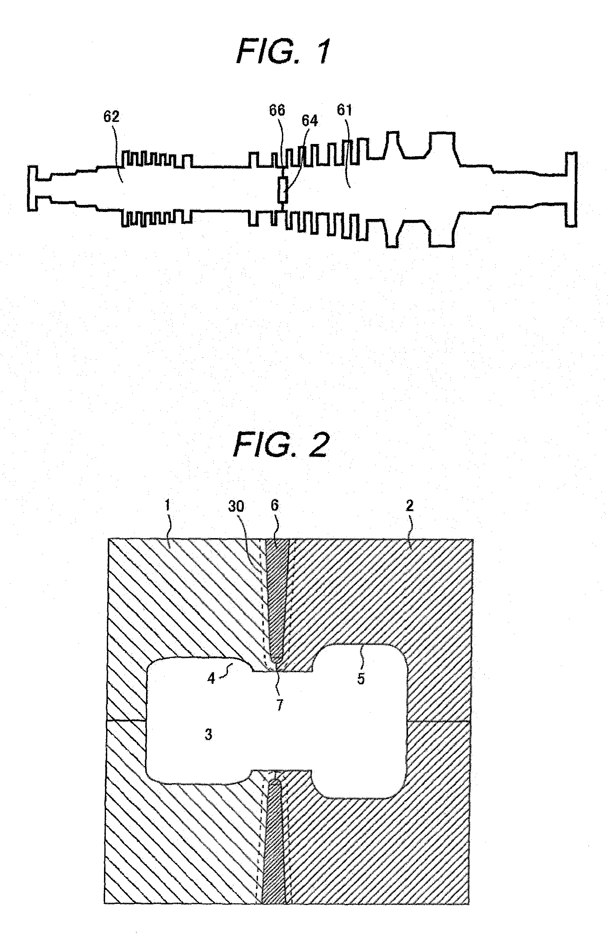

Example 1 of the present invention will be described below using Figs. 1 to 11. Fig. 1 is a sectional view of the turbine rotor for high and low pressure steams according to the present invention. The turbine rotor for high and low pressure steam shown in Fig. 1 is divided into two components, that is, a rotor 62 for high pressure and a rotor 61 for low pressure, which are connected to each other by a weld 6 (weld metal 66) to construct the turbine rotor. A joint connected by the weld 6 has a hollow portion 64, which decreases the weight of the turbine rotor. The rotor 62 for high pressure includes 1% Cr-Mo-V steel. The rotor 61 for low pressure includes 3 to 4% Ni-Cr-Mo-V steel. Table 1 shows chemical compositions (weight percent) of weld wires and materials constituting the rotor of a typical turbine rotor, the rest of the compositions being Fe.

[Table 1]

| Steel grade | | C | Si | Mn | Ni | Cr | Mo | Nb | V |
|---|---|---|---|---|---|---|---|---|---|
| Material for high pressure 1: 1% Cr-Mo-V steel | | 0.29 | 0.04 | 0.77 | 0.52 | 1.13 | 1.353 | – | 0.27 |
| Weld | (1) 1.25% Cr steel | 0.06 | 0.50 | 0.99 | – | 1.22 | 0.54 | – | – |
| | (2) 2.25% Cr steel | 0.03 | 0.49 | 1.09 | – | 2.22 | 1.01 | – | – |
| Material for low pressure 2: 3 to 4% Ni-Cr-Mo-V Steel | | 0.24 | 0.04 | 0.27 | 3.71 | 1.83 | 0.36 | – | 0.08 |

In this example, the material of the rotor 62 for high pressure includes 1.13 % Cr and the material of the rotor 61 for low pressure includes 1.83 % Cr. From the viewpoint of only the chemical compositions, the weld wire should include an amount of Cr between the amounts of Cr of both rotors. However, taking into consideration a heat treatment property after the welding, the weld wire includes (1) 1.22 % Cr or (2) 2.22 % Cr, which is more than the amounts of both rotors, so as not to reduce the strength of the wire even under the heat treatment at a temperature equal to or higher than a last tempering temperature of both rotors.

Fig. 2 is a partial sectional view of a weld joint of the turbine rotor according to the present invention. Butted portions 7 are provided at the bottom of a welding groove 30 provided in a rotor material 1 for high pressure and a rotor material 2 for low pressure so as va align both rotor. The turbine rotor is constituted by filling welding groove 30 with the weld wire to form the weld 6 and fusion-joining the rotor materials 1 and 2 to each other. A hollow portion 3 is provided in the rotor materials 1 and 2 to reduce the weight of the rotor. The hollow portion 3 has convex portions 4 and 5 for avoiding concentration of load stress in an actual machine on the butted portions 7.

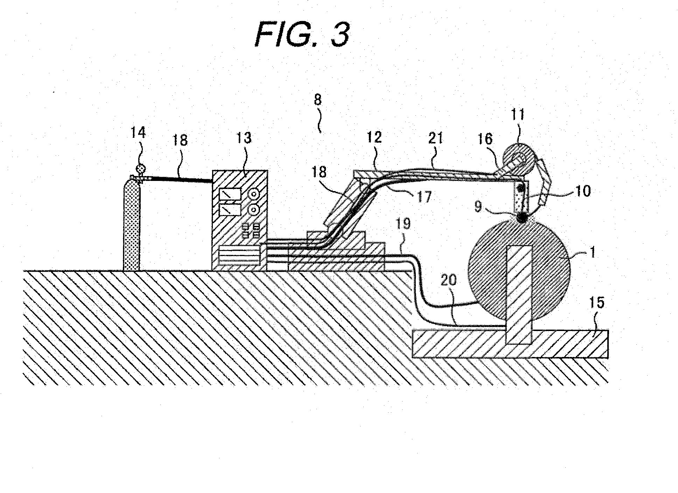

Fig. 3 is a schematic diagram of a welding machine for welding the turbine rotor. In this example, the welding machine is used to perform a tungsten inert gas (TIG) welding method. The welding machine 8 includes a torch 10 which electrodes 9 are attached to, a weld wire 11 forming the weld 6, and an arm 12 supporting and fixing the torch 10 and the weld wire 11. The welding machine 8 further includes a weld power 13 for supplying current of a predetermined value to the electrodes 9, a gas bombe 14 for supplying inert gas to be spouted from around the electrodes 9 so as to suppress oxidization of the weld 6, a positioner 15 for supporting and rotating the turbine rotor, and a wire feeder 16 for feeding the weld wire 11 to the weld 6. A power cable 17 extending from the weld power 13 is attached to the electrodes 9 so as to supply the current from the weld power 13 to the electrodes 9. A gas hose 18 is attached to the torch 10 for receiving the inert gas supplied from the gas bombe 14. A power cable 19 is attached to the turbine rotor so as to generate electric arc between the electrodes 9 and the turbine rotor. A signal cable 20 for the positioner is attached to the positioner 15, so that the rotation speed and rotation direction of the positioner 15 is controlled by receiving a control signal from the weld power 13. The wire feeder 16 controls the feed speed of the weld wire 11 by receiving a control signal from a signal cable 21 for the wire feeder. The welding machine of the present invention can employ a submerged arc welding (SAW) method, a shielded metal are welding method, a metal inert gas (MIG) welding method, as well as the tungsten inert gas (TIG) welding method shown in Fig. 3, and a combination thereof. Although Fig. 3 shows that the rotor is positioned laterally and welding is performed in the downward direction, the rotor may be positioned vertically and welding may be performed in the horizontal direction.

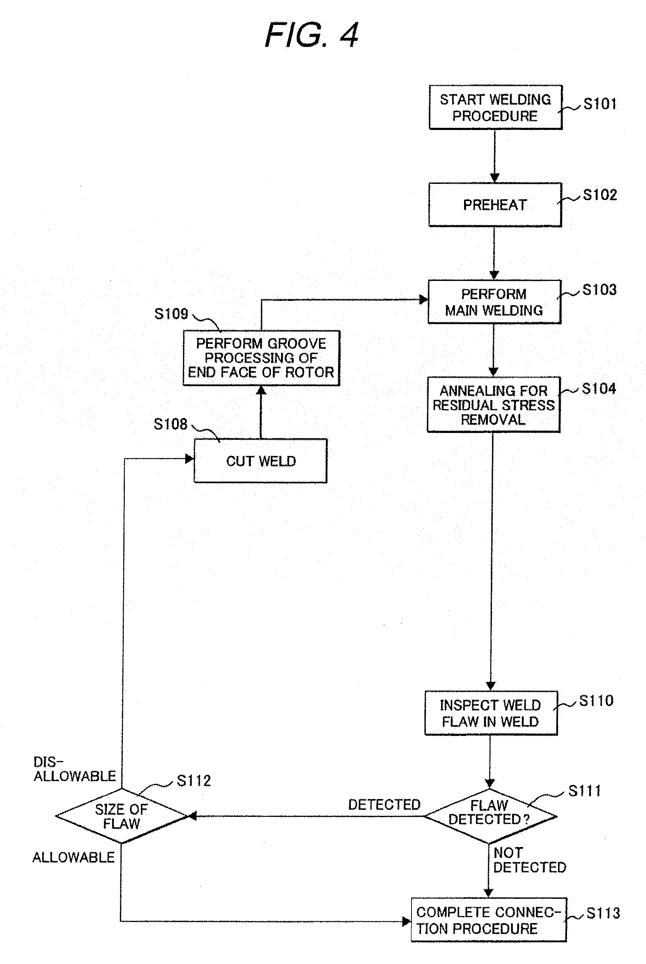

Fig. 4 shows an example of a flowchart of a welding procedure for welding and connecting a plurality of rotors or rotor parts in the turbine rotor according to the present invention. First, when an instruction to start a welding procedure is given in step S101, rotors are preheated for relaxation of thermal stress in welding in step S102. Then, in step S103, main welding is performed to weld and connect the rotors together by the welding machine shown in Fig. 3. In step S104, annealing for stress removal is performed so as to uniformize heat having entered in the weld 6 in the main welding. In step S110, inspection of weld flaws in the weld 6 is performed. In step S111, the flaw is detected. When the size of the flaw is not allowable from the viewpoint of mechanical strength in step S112, the weld 6 is cut in step S108, and then the end face of the rotor is subjected to groove processing in step S109. When no flaw is detected in step S111, or when the size of the flaw can be allowable in step S112, the operation proceeds to step S113, in which the connection procedure is completed.

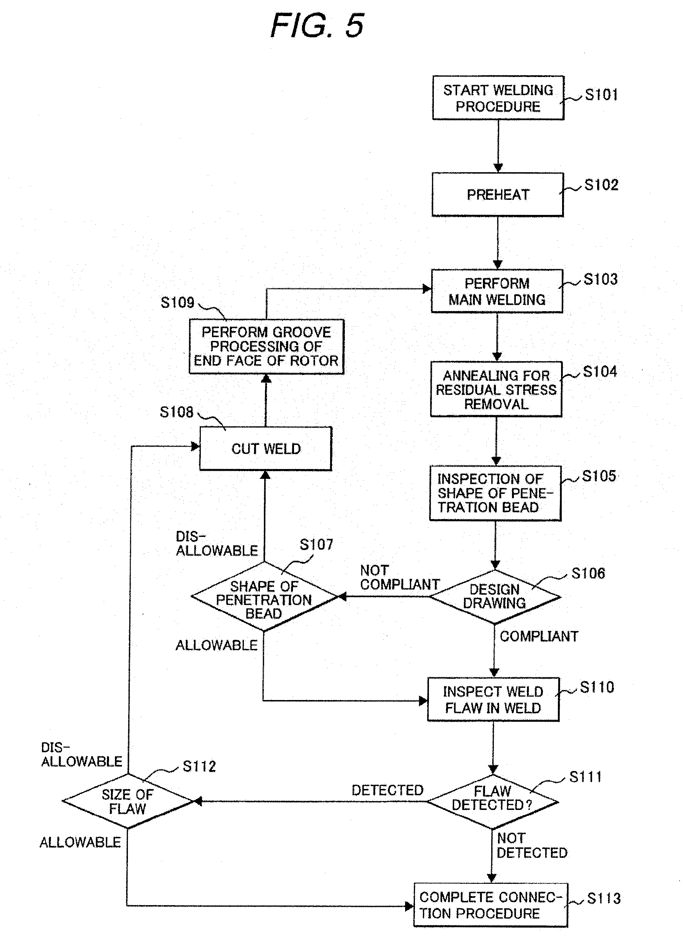

For reference, Fig. 5 shows an example of a flowchart of another welding procedure, which is not based on the example of the present invention. This flowchart further includes steps S105 to S107 between step S104 and step S110 in the flowchart shown in Fig. 4. In step S105, the shape of penetration bead is inspected. In step S106, it is determined whether or not the shape of the penetration bead is compliant with the design drawing. When the shape is not compliant with the design drawing, it is determined whether or not the shape of the penetration bead is allowable in step S107. When the shape of the penetration bead is not allowable from the viewpoint of mechanical strength, the weld 6 is cut in step S108, and the end face of the rotor is subjected to the groove processing in step S109. Then, the operation returns to step S103, and the main welding is performed again. When the shape of the penetration bead is determined to be compliant with the design drawing in step S106, or when the shape of the penetration bead is determined to be allowable in step S107, inspection of weld flaws in the weld 6 is performed in step S110. Comparing Figs. 4 with 5, the example of the present invention does not include steps S105 to S107, that is, the inspection step of the shape of the penetration bead and the rewelding step of the penetration bead are not necessary, which can shorten the process time.

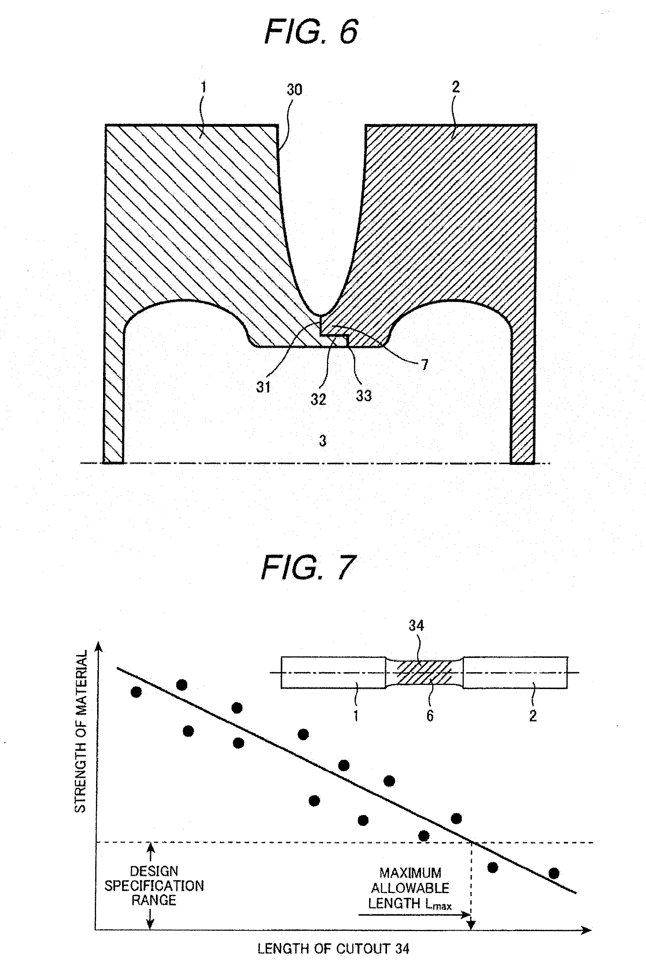

Fig. 6 shows a section of the vicinity of the weld before welding. The rotor for high pressure and the rotors for low pressure are in contact with each other at the butted portions formed in mating (bitting) shape. The contact faces include an outer contact face 31 in the radial direction, an outer contact face 32 in the axial direction, and an inner contact face 33 in the radial direction, which are positioned from the outside in this order. In this example, the contact face 32 in the axial direction is arranged on the side of the rotor material 2 for low pressure. This is because a heater (not shown) is attached more easily to the rotor material 2 for low pressure in preheating for facile engagement of the butted portions 7. The length $L_3$ of the inner contact face 33 in the radial direction is 1.8 mm. This length is determined based on the result of experiments of a material strength test for the weld joint comprised of both rotor materials and the weld metal 6 (the weld 6) as shown in Fig. 7.

The lateral axis in Fig. 7 indicates the length of a cutout 34 introduced into the weld joint comprised of the rotor material 1, the rotor material 2, and the weld metal 6. The longitudinal axis in Fig. 7 indicates the strength of the material of the weld joint. The longitudinal axis also indicates the level of design specifications required for preventing breakage of the weld in operation of the actual machine. The result shows that the material strength of the weld joint tends to decrease with the length of the cutout 34 increasing. Thus, in order to satisfy the design specifications for the material strength, the length of the cutout 34 should be equal to or less than the maximum allowable length $L_{max}$. In this example, the maximum allowable length $L_{max}$ of the cutout 34 was 2.0 mm.

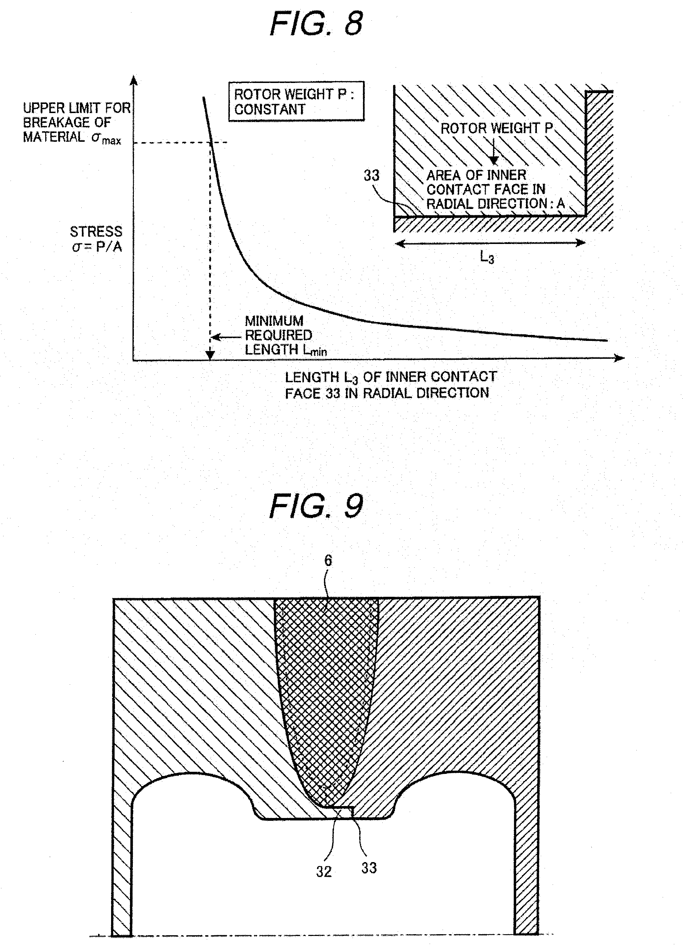

In assembling the rotors vertically, the inner contact face in the radial direction has a lower limit of the length for supporting the weight of the rotor itself. Fig. 8 shows an example of the result of calculation showing the relationship between the length $L_3$ of the inner contact face 33 in the radial direction and the load stress on the contact face 33. The longitudinal axis indicates the stress σ obtained by dividing a weight P of the rotor on the upper side by an area A of the inner contact face 33 in the radial direction (σ = P/A). The longitudinal axis also indicates the uppermost limit $\sigma_{max}$ which may cause a breakage of the material. As the length $L_3$ of the inner contact face 33 in the radial direction increases, the load stress decreases. Thus, in order for the stress σ to fall below the upper limit $\sigma_{max}$, which may cause the breakage of the material, the length $L_3$ of the inner contact face 33 in the radial direction should be equal to or more than the minimum required length $L_{min}$. In this example, the minimum required length $L_{min}$ of the length $L_3$ of the inner contact face 33 in the radial direction, was 0.5 mm.

As can be seen from the above-mentioned results, the length $L_3$ of the inner contact face 33 in the radial direction needs to be in the range of 0.5 to 2.0 mm, as represented by the following Equation (1).

$$0.5 \leq L_3 \leq 2.0 \tag{1}$$

Fig. 9 shows a section of the vicinity of the weld after the welding process. The weld metal 6 is fused by arc heat discharged from the weld torch, and the welding groove 30 is filled with the weld metal 6, and then the rotor material 1 for high pressure and the rotor material 2 for low pressure are connected metallurgically to each other. The weld metal 6 penetrates the rotor material. At this time, the outer contact face 31 in the radial direction is entirely diminished by the penetration of the weld metal 6. The outer contact face 32 in the axial direction is diminished by the penetration of the weld metal 6, but at least a part of the outer contact face 32 remains. In this example, the length $L_2$ of the outer contact face 32 in the axial direction was 2.0 mm after the welding. Before the welding, the length $L_2$ of the outer contact face 32 in the axial direction had been 2.5 mm, and was reduced by 0.5 mm due to the penetration of the weld metal 6. That is, the tip of the penetration portion of the weld metal 6 is located on the outer contact face 32 in the axial direction. The entire inner contact face 33 in the radial direction remains without penetration of the weld metal 6 into it.

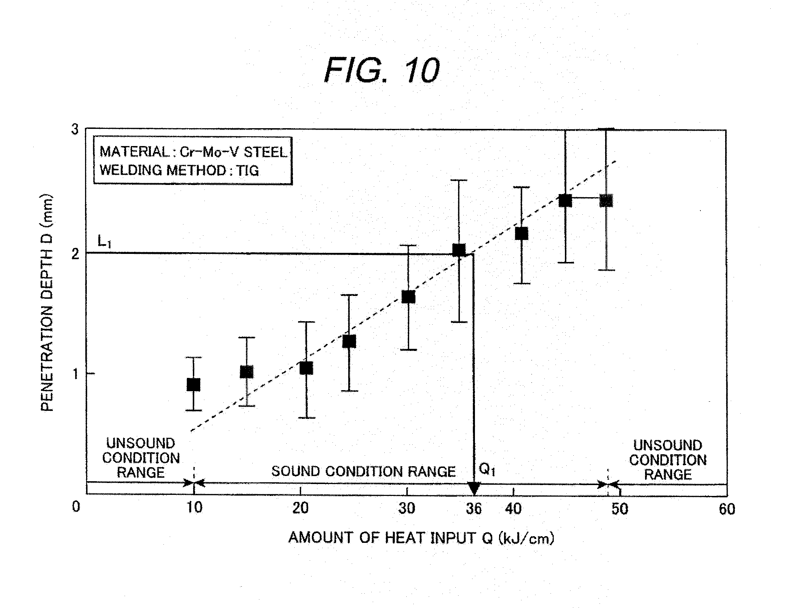

Fig. 10 shows an example of the result of measurement showing the relationship between the amount of heat input Q and the penetration depth D. The rotor material is Cr-Mo-V steel and the welding method is TIG. The lateral axis indicates the amount of heat input represented by the following Equation (2). This represents the amount of heat per unit length introduced into the material, where the amount is determined by a scanning speed and arc heat generated between the torch and the material.

$$Q = EI/v \qquad\qquad (2)$$

wherein E is a voltage value applied between the torch and the material, I is a current value passing through the arc, and v is a scanning speed when a heat source (the torch) moves relatively with respect to the material. The longitudinal axis represents the penetration depth D indicating the depth in which the material is fused by the heat input. This is a result obtained by introducing the weld wire over the surface of the material, welding at each amount of heat input, cutting the material, grinding the section of the cut material, imaging a penetration portion by an optical microscope, and then measuring the depth of the penetration portion with the image. The penetration portion was formed in a semicircular shape, the center of which was located directly under the weld torch, from the surface of the material. In the measurement, the penetration depth D was set to a representative value of the length of the penetration portion in the direction parallel to the weld torch. Fig. 10 shows that the penetration depth D tends to increase with the amount of heat input Q. This means that the penetration depth D can be controlled by adjusting the amount of heat input Q.

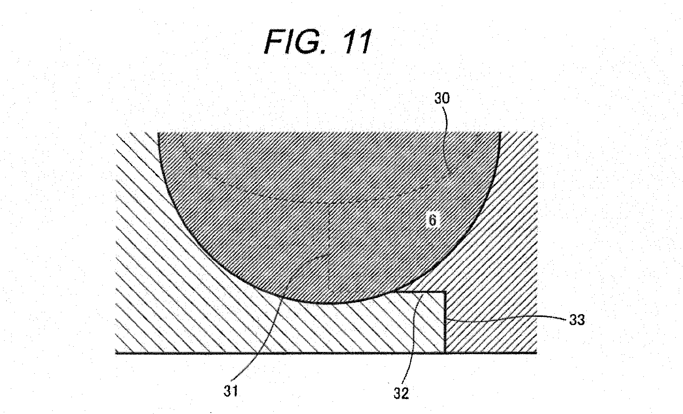

Fig. 11 is a schematic diagram showing the details of the butted portions shown in Fig. 9. In this example, the length $L_1$ of the outer contact face 31 in the radial direction is 2 mm. Therefore, based on the measurement result shown in Fig. 10, welding is performed by introducing heat Q of about 36 kJ/cm, allowing the weld metal 6 to penetrate only the outer contact face 31 in the radial direction of three contact faces as shown in Fig. 11.

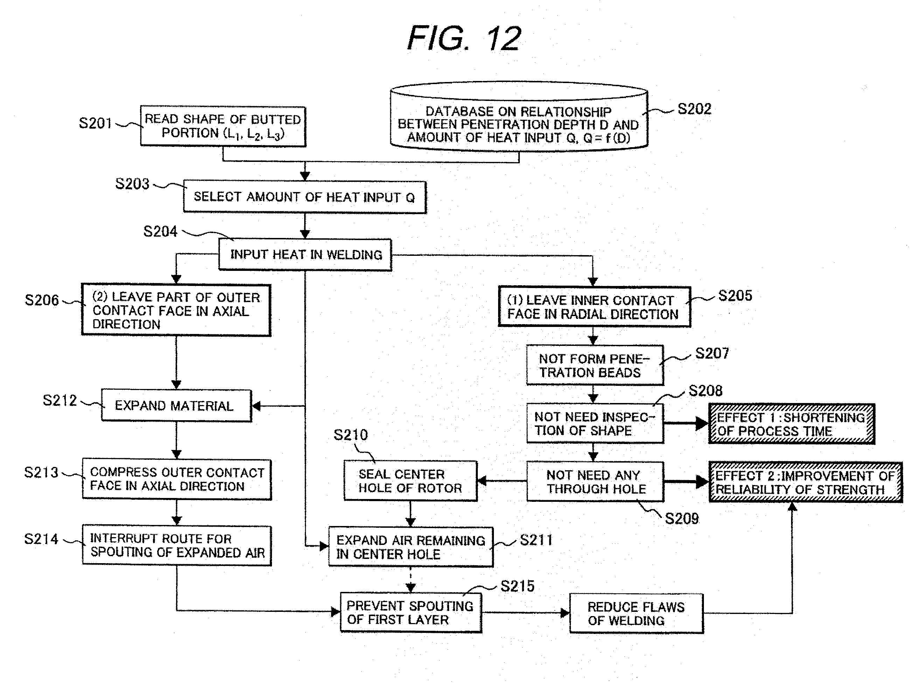

Fig. 12 shows a procedure and a physical phenomenon in welding the butted portions together. First, the shape ($L_1$, $L_2$, $L_3$) of the butted portion is read in (steps 201). By referring a database on the relationship between the penetration depth D and the amount of heat input Q (step S202), an amount of heat input Q is selected to satisfy the following Equation (3) (step S203).

$$L_1 \leq D < \sqrt{(L_1{}^2 + L_2{}^2)} \qquad\qquad (3)$$

At this time, in order not to form penetration beads, the amount of heat input Q should be selected to simultaneously satisfy the Equations (3) and (4).

$$L_1 \leq D < (L_1 + L_2) \qquad\qquad (4)$$

Then, the heat for welding is input (step S204) in welding to leave the inner contact face in the radial direction (step S205) and a part of the outer contact face in the axial direction (step S206). For the inner contact face in the radial direction, the penetration beads are not formed (step S207), and then the inspection of the shape is not necessary (step S208). This example has the first effect of shortening the manufacturing process time of the welded rotor, and also has the second effect of improving the reliability of strength because no through hole for inspection is required (step S209). However, the center hole of the rotor is sealed (step S210) because no through hole is formed. Air remaining in the center hole of the rotor is heated by the heat input (step 5204) and expanded (step S211). As a result, the weld metal might be easily spouted in a position where the material in the rotor center hole is softened in the root pass welding. This spouting of the metal can be prevented by remaining the part of the outer contact face in the axial direction. The heat input (step S204) expands the material (step S212).

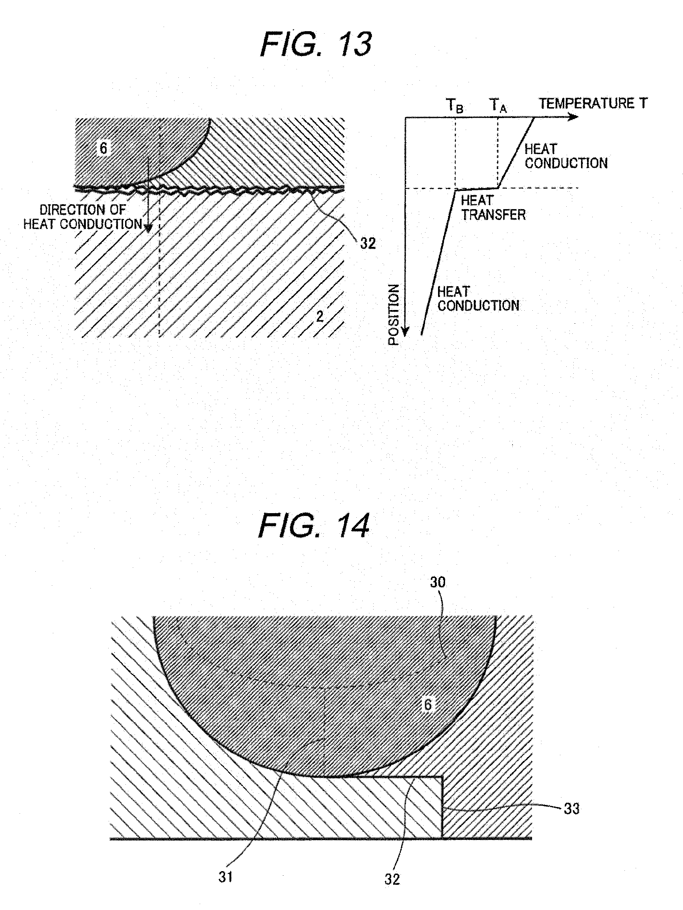

The schematic diagram of the temperature distribution of the vicinity of the outer contact face in the axial direction will be described below using Fig. 13. The outer contact face 32 in the axial direction intersects the direction of heat transfer at about a right angle. The entire contact face 32 is in microscopically inhomogeneous contact with the rotor material 2. Specifically, the contact face 32 is in point or surface contact by microscopic asperities on it. Since some voids exist between the contact face 32 and the rotor material 2, the thermal conductivity is reduced. Thus, the temperature, gradient becomes discontinuous between the material A, to which heat is first transferred, and the material B, to which heat is next transferred to after the heat transfer via the outer contact face 32 in the axial direction. That is, the material A is at a higher temperature, whereas the material B is at a lower temperature, satisfying the following Equation (5).

$$T_A > T_B \qquad\qquad (5)$$

A thermal expansion $\Delta L$ of the material due to an increase in temperature is represented by the following Equation (6).

$$\Delta L = \alpha \ (T-r.t.) \ L \qquad\qquad (6)$$

wherein a is a thermal expansion coefficient, T is a temperature of the material after heating, r.t. is a room temperature (of about 27 °C), and L is a length of a heated part.
When L is constant, the following Equation (7) is satisfied based on the Equations (5) and (6).

$$\Delta L_A > \Delta L_B \qquad\qquad (7)$$

This shows that the amount of expansion of the material A is larger than that of the material B. As a result, the physical phenomenon shown in Fig. 10 is as follows. Expansion of the material A (step S212) compresses the microscopic voids on the outer contact face 32 in the axial direction (step S213), allowing the contact face 32 to be easily brought into intimate contact with the rotor material 2. Thus, the contact face 32 interrupts a route through which the remaining air expanded in the center hole may be spouted (step S214), preventing the spouting of the weld metal of an first layer (step S215). The spouting of the weld metal of the first layer leads to a kind of welding flaw, which is subjected to the welding flaw inspection as shown in step S110 of Fig. 4. However, the prevention of the spouting of the weld metal of the first layer may lead to reduction in flaws of the welding, which can contribute to the second effect of improving the reliability of strength.

[Example 2]

With reference to Fig. 14, example 2 of the present invention will be described. This example is the same as Example 1 except, for the length of the outer contact face 32 in the axial direction, and therefore a description of the same other components as Example 1 will be omitted below.
The result of a preliminary verification test performed prior to this example will be described below. The length $L_2$ of the outer contact face 32 in the axial direction was 2.5 mm before and after the welding. That is, the penetration tip of the weld metal 6 did not reach the outer contact face 32 in the axial direction. In this case, the effect was not obtained of preventing the spouting of the metal by compression of the outer contact face 32 in the axial direction as described in Fig. 11. This result shows that in order to obtain the effect of preventing the spouting of the weld metal 6, the penetration tip of the weld metal 6 needs to be located on the outer contact face 32 in the axial direction. The section of the vicinity of the weld after the welding is shown in Fig. 14. For example, when a start point of the outer contact face 32 in the axial direction after the welding was located in a position apart by 0.05 mm from the center of the welding groove 30, the same effect of preventing the spouting of the metal as that shown in Fig. 11 was obtained.

[Example 3]

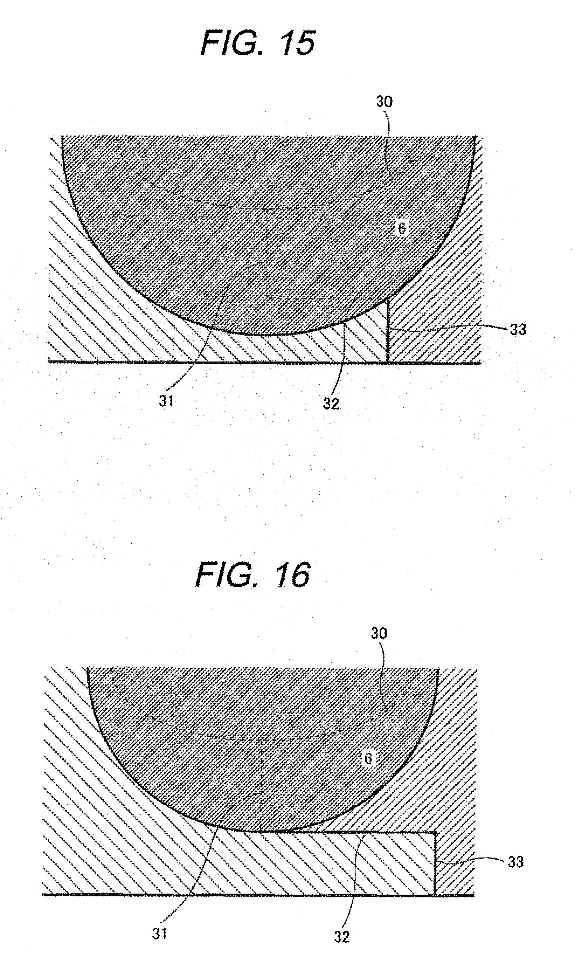

With reference to Fig. 15, example 3 of the present invention will be described. This example is the same as Example 1 except for the length of the outer contact face 32 in the axial direction, and therefore a description of the same other components as Example 1 will be omitted below.
The result, of a preliminary verification test performed prior to this example will be described below. The length $L_2$ of the outer contact face 32 in the axial direction was 2.5 mm before the welding and 0 mm after the welding. That is, the weld metal 6 included the entire area of the outer contact face 32 in the axial direction. In this case, since the outer contact face 32 in the axial direction disappeared, the effect of preventing the spouting of the weld metal was not obtained. This result shows that in order to obtain the effect of preventing the spouting of the metal, it is essential to leave a part of the outer contact face 32 in the axial direction. The section of the vicinity of the weld after the welding is shown in Fig. 15. For example, when the length $L_2$ of the outer contact face 32 in the axial direction was 0.05 mm, the same effect of preventing the spouting of the metal as that shown in Fig. 11 was obtained.

[Example 4]

With reference to Fig. 16, example 4 of the present invention will be described. This example is the same as Example 1 except for the length of the outer contact face 32 in the axial direction, and therefore a description of the same other components as Example 1 will be omitted below.

The result of a preliminary verification test performed prior to this example will be described below. The length $L_2$ of the outer contact face 32 in the axial direction was 4.0 mm before the welding and was also 4.0 mm after the welding. That is, the penetration tip of the weld metal 6 did not reach the outer contact face 32 in the axial direction. In this case, since the outer contact face 32 in the axial direction disappeared, the effect of preventing the spouting of the metal was not obtained. This result shows that in order to obtain the effect of preventing the spouting of the weld metal 6, the penetration tip of the weld metal 6 needs to be located on the outer contact face 32 in the axial direction, and that such a tendency does not relate to the length of the outer contact face 32 in the axial direction. The section of the vicinity of the weld after the welding is shown in Fig. 16. For example, when a start point of the outer contact face 32 in the axial direction after the welding was located in a position apart by 0.05 mm from the center of the welding groove 30, the same effect of preventing the spouting of the metal as that shown in Fig. 11 was obtained.

[Example 5]

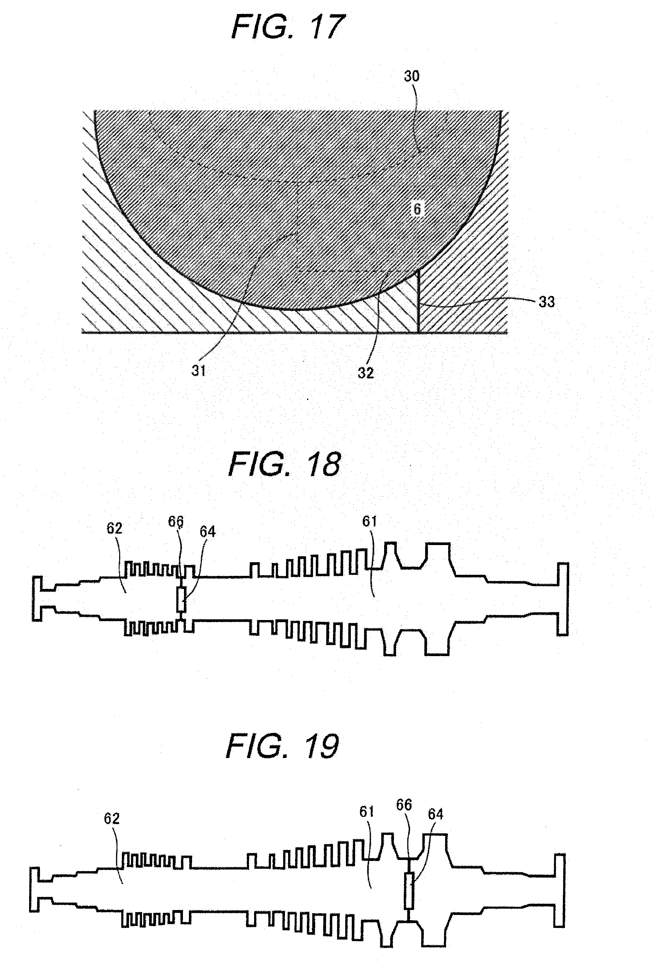

With reference to Fig. 17, example 5 of the present invention will be described This example is the same as Example 1 except for the length of the outer contact face 32 in the axial direction, and therefore a description of the same other components as Example 1 will be omitted below.

The result of a preliminary verification test performed prior to this example will be described below. The length $L_2$ of the outer contact face 32 in the axial direction was 3.0 mm before the welding and 0 mm after the welding. That is, the weld metal 6 included the entire area of the outer contact face 32 in the axial direction. In this case, since the outer contact face 32 in the axial direction disappeared, the effect of preventing the spouting of the weld metal was not obtained. This result shows that in order to obtain the effect of preventing the spouting of the metal, it is essential to leave a part of the outer contact face 32 in the axial direction, and that such a tendency does not relate to the length of the outer contact face 32 in the axial direction. The section of the vicinity of the weld after the welding is shown in Fig. 17. For example, when the length $L_2$ of the outer contact face 32 in the axial direction was 0.05 mm, the same effect of preventing the spouting of the metal as that shown in Fig. 11 was obtained.

[Example 6]

With reference to Table 2, Example 6 of the present invention will be described.

[Table 2]

| Steel grade | | C | Si | Mn | Ni | Cr | Mo | Nb | V |
|---|---|---|---|---|---|---|---|---|---|
| Material for high pressure: 12% Cr steel | | 0.14 | 0.06 | 0.63 | 0.62 | 10.4 | 1.21 | 0.05 | 0.17 |
| Buttering material: 9% Cr steel | | 0.07 | 0.16 | 0.99 | 0.68 | 8.97 | 0.90 | 0.04 | 0.18 |
| Weld metal | (1) 1.25% Cr steel | 0.06 | 0.50 | 0.99 | – | 1.22 | 0.54 | – | – |
| | (2) 2.25% Cr steel | 0.03 | 0.49 | 1.09 | – | 2.22 | 1.01 | – | – |
| Material for low pressure: Cr-Mo-V steel | | 0.29 | 0.04 | 0.77 | 0.52 | 1.13 | 1.353 | – | 0.27 |

This example is the same as Example 1 except for a combination of the material and weld wire, and therefore a description of the same other components as Example 1 will be omitted below. The rotor 62 for high pressure includes 12 % Cr steel. The rotor 61 for low pressure includes Cr-Mo-V steel. Table 2 shows chemical compositions (weight percent) of the weld wire and materials constituting the rotors of the turbine rotor, the rest of the compositions being Fe.

In this example, the material of the rotor 62 for high pressure includes 10.04 % Cr and the material of the rotor 61 for low pressure includes 1.13 % Cr. From the viewpoint of only the chemical compositions, the buttering material should include an amount of Cr between the amounts of Cr of both rotors. However, taking into consideration a heat treatment property after the welding, the buttering material applied to the rotor for high pressure was 9% Cr steel. Further, the weld wire includes 1.22 % Cr or 2.22 % Cr, which is more than the amounts of the rotor 61 for low pressure, so as not to reduce the strength of the wire even under the heat treatment at a temperature equal to or higher than a last tempering temperature of both rotors. Table 2 shows chemical compositions of the typical weld wires. Different combinations of the material and the weld wire do not change the effect shown in Example 1.

[Example 7]

With reference to Table 3, Example 7 of the present invention will be described.

[Table 3]

| Steel grade | | C | Si | Mn | Ni | Cr | Mo | Nb | V |
|---|---|---|---|---|---|---|---|---|---|
| Material for high pressure: 3 to 4% Ni-Cr-Mo-V steel | | 0.24 | 0.04 | 0.27 | 3.71 | 1.83 | 0.36 | – | 0.08 |
| Weld metal | (1) 80 kg class wire | 0.07 | 0.11 | 1.21 | 2.87 | 0.38 | 0.70 | – | – |
| | (2) 100 kg class wire | 0.08 | 0.30 | 1.5 | 3.21 | 0.90 | 1.00 | – | – |
| Material for low pressure: 3 to 4% Ni-Cr-Mo-V steel | | 0.24 | 0.04 | 0.27 | 3.71 | 1.83 | 0.36 | – | 0.08 |

This example is the same as Example 1 except for a combination of the material and weld wire, and therefore a description of the same other components as Example 1 will be omitted below. The rotor 62 for high pressure and the rotor 61 for low pressure include 3 to 4% Ni-Cr-Mo-V steel. Table 3 shows chemical compositions (weight percent) of the weld wire and materials constituting the rotors of the turbine rotor, the rest of the compositions being Fe.

In this example, each of the material of the rotor 62 for high pressure and the rotor 61 for low pressure includes 3.71 % Ni. From the viewpoint of only the chemical compositions, the weld metal 6 should include an amount of Ni between the amounts of Ni of both rotors. However, in order to prevent cracking after the heat treatment, the weld metal 6 includes 2.87 % or 3.21 % Ni, which is lower than the amounts of both rotors. Table 3 shows chemical compositions of the typical weld wires. Different combinations of the material and the weld wire do not change the effect shown in example 1.

[Example 8]

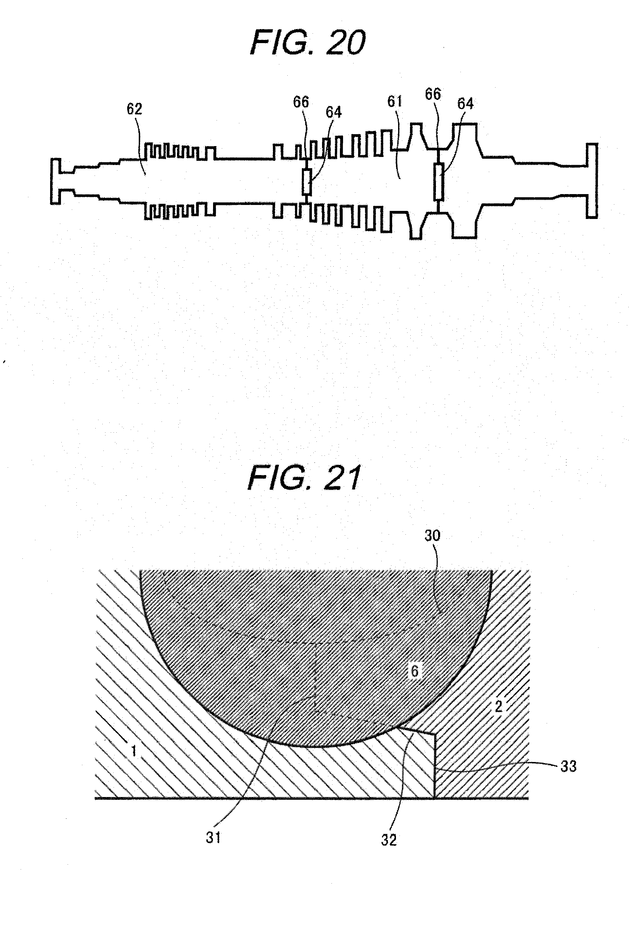

With reference to Figs. 18 to 20, Example 8 of the present invention will be described. This example is the same as Example 1 except for the position of the weld 6 (weld metal 66), and therefore a description of the same other components as Example 1 will be omitted below. Fig. 18 is a schematic sectional view of a turbine rotor for the high and low pressure according to the present invention. This turbine rotor has the same shape as the turbine rotor of Example 1 shown in Fig. 1, but the welding position is located at the high- pressure side. The weld may be located at the low-pressure side as shown in Fig. 19. Further, the turbine rotor may have plurality of welds as shown in Fig. 20. The weld is preferably located at the most cost-effective position, which is determined based on the pressure and temperature required for the turbine rotor and costs of the rotor materials for high pressure and for low pressure.

[Example 9]

With reference to Figs. 21 to 23, Example 9 of the present invention will be described. This example is the same as Example 1 except for the direction of the outer contact face 32 in the axis direction, the direction of the inner contact face 33 in the radial direction, or the both directions of the outer contact face 32 in the axis direction and the inner contact face 33 in the radial direction. Therefore, a description of the same other components as Example 1 will be omitted below.

Fig. 21 is a schematic diagram showing butted portions in which the outer contact face 32 in the axial direction is inclined such that the outer contact face 32 is directed toward the outside of the rotor on the side of the rotor material 1 for high pressure and also directed toward the inside of the rotor on the side of the rotor material 2 for low pressure. It is not preferable that the contact face 32 is inclined in the reverse direction because the rotor material 1 for high pressure cannot be assembled to the rotor material 2 for low pressure.

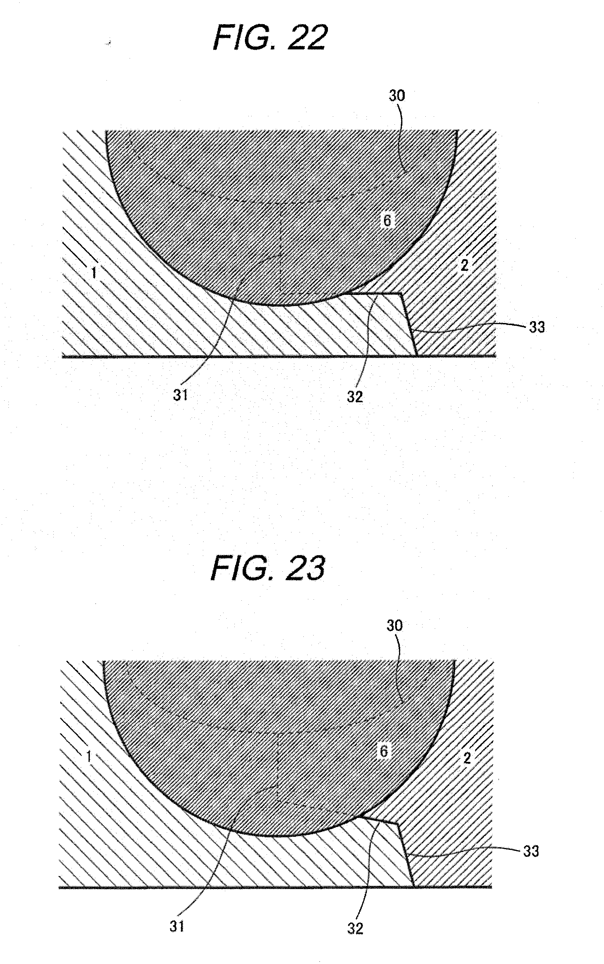

Fig. 22 is a schematic diagram showing butted portions in which the inner contact face 33 in the radial direction is inclined such that the inner contact face 33 is directed toward the rotor material 2 for low pressure on the inner side of the rotor. It is not preferable that the inner contact face 33 is inclined in the reverse direction because the butted portions may be easily broken down in assembling the rotor material 1 for high pressure to the rotor material 2 for low pressure.

Fig. 23 is a schematic diagram showing butted portions in which both the outer contact face 32 in the axial direction and the inner contact face 33 in the radial direction are inclined. The outer contact face 32 is directed toward the outside of the rotor on the side of the rotor material 1 for high pressure and also directed toward the inside of the rotor on the side of the rotor material 2 for low pressure. The inner contact face 33 is directed toward the rotor material 2 for low pressure on the inner side of the rotor. It is not preferable that either the outer contact face 32 or the inner contact face 33 is inclined, or both of them are inclined, in the reverse direction because the disadvantages described in Figs. 21 and 22 arise. Formation of the butted portions in such shapes as described in this example does not change the effect shown in Example 1.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1.  A turbine rotor comprising:

    a rotor (61) for low pressure; and
    a rotor (62) for high pressure, the rotors for low pressure and for high pressure (61, 62) being integrated together into a steam turbine rotor by welding respective ends of the rotors to each other;

    wherein the respective ends of the rotors (61, 62) are in contact with each other via at least two contact faces (31, 32, 33) in a radial direction and an axial direction of the turbine rotor; and at least parts of the respective ends are welded together.

2.  The turbine rotor according to claim 1,
    wherein the respective ends of the rotors (61, 62) are welded to each other via a weld (6) including weld metal (66); and at least apart of the weld (6) is located on a contact face (31) in the axial direction of the at least two contact faces (31, 32, 33).

3.  The turbine rotors according to claim 1 or 2,
    wherein the respective ends of the rotors (61, 62) are welded to each other via a weld (6) including weld metal(66); and a contact face (33) in the radial direction of the at least two contact faces (31, 32, 33) is located on a lower pressure side of the turbine rotor with respect to the weld (6).

4.  The turbine rotor according to at least one of claims 1-3,
    wherein a contact face (33) in the radial direction of the at least two contact faces (31, 32, 33) has a radial length of 0.5 to 2.0 mm.

5.  The turbine rotor according to at least one of claims 1-4,
    wherein the respective ends of the rotors (61, 62) are welded to each other via a weld (6) including weld metal (66) ;

and a contact face (32) in the axial direction of the at least two contact faces (31, 32, 33) is located on a lower pressure side of the turbine rotor with respect to the weld (6).

6. The turbine rotor according to at least one of claims 1-5,
wherein a contact face (32) in the axial direction of the at least two contact faces (31, 32, 33) is located on a higher pressure side with respect to a contact face (33) in the radial direction of the at least two contact faces (31, 32, 33).

7. The turbine rotor according to at least one of claims 1-6, further comprising a center hole (64) formed at a center portion of the turbine rotor.

8. The turbine rotor according to at least one of claims 1-7,
wherein no through hole is formed from an outer peripheral surface of the turbine rotor to the center hole (64).

9. A turbine rotor comprising:

a rotor (61) for low pressure; and
a rotor (62) for high pressure, the rotors for low pressure and for high pressure (61, 62) being integrated together into a steam turbine rotor by welding respective ends of the rotors (61, 62) to each other;

wherein the respective ends of the rotors (61, 62) have stepped structures to be engaged to each other; and
each of the stepped structures has at least two contact faces (31, 33) in a radial direction of the turbine rotor, the respective ends of the rotors (61, 62) being in contact with each other via the contact faces (31, 32).

10. The turbine rotor according to claim 9,
wherein at least a contact face (31) located in an outermost position from a center of the turbine rotor among the at least two contact faces (31, 32) in the radial direction is welded.

11. The turbine rotor according to claim 9 or 10, further comprising a center hole (64) formed at a center portion of the turbine rotor.

## FIG. 1

## FIG. 2

# FIG. 3

# FIG. 4

```
                                    ┌─────────────────┐
                                    │ START WELDING   │── S101
                                    │ PROCEDURE       │
                                    └─────────────────┘
                                            │
                                            ▼
                                    ┌─────────────────┐
                                    │    PREHEAT      │── S102
                                    └─────────────────┘
                                            │
                                            ▼
      ┌──────────────────────┐      ┌─────────────────┐
 S109 │ PERFORM GROOVE       │─────▶│    PERFORM      │── S103
      │ PROCESSING OF        │      │  MAIN WELDING   │
      │ END FACE OF ROTOR    │      └─────────────────┘
      └──────────────────────┘              │
                  ▲                          ▼
                  │                  ┌─────────────────┐
 S108 │           │                 │ ANNEALING FOR   │── S104
      │  ┌─────────────────┐         │ RESIDUAL STRESS │
      │  │    CUT WELD     │         │ REMOVAL         │
      │  └─────────────────┘         └─────────────────┘
      │                                      │
      │                                      ▼
      │                              ┌─────────────────┐
      │                              │ INSPECT WELD    │── S110
      │                              │ FLAW IN WELD    │
      │                              └─────────────────┘
      │                                      │
  DIS-                                        ▼
  ALLOWABLE  ╱◇╲  S112       DETECTED      ╱◇╲  S111
          ╱ SIZE OF ◇◀─────────────────── ◇  FLAW  ╲
          ╲  FLAW  ╱                       ╲ DETECTED? ╱
           ╲◇╱                              ╲◇╱
  ALLOWABLE                                NOT DETECTED
      │                                      │
      │                              ┌──────────────────┐
      └─────────────────────────────▶│ COMPLETE CONNEC- │── S113
                                     │ TION PROCEDURE   │
                                     └──────────────────┘
```

# FIG. 5

START WELDING PROCEDURE — S101

PREHEAT — S102

PERFORM MAIN WELDING — S103

S109 — PERFORM GROOVE PROCESSING OF END FACE OF ROTOR

ANNEALING FOR RESIDUAL STRESS REMOVAL — S104

S108 — CUT WELD

INSPECTION OF SHAPE OF PENETRATION BEAD — S105

DIS-ALLOWABLE

S107 SHAPE OF PENETRATION BEAD

NOT COMPLIANT

S106 DESIGN DRAWING

ALLOWABLE

COMPLIANT

INSPECT WELD FLAW IN WELD — S110

DIS-ALLOWABLE

S112 SIZE OF FLAW

DETECTED

S111 FLAW DETECTED?

ALLOWABLE

NOT DETECTED

COMPLETE CONNECTION PROCEDURE — S113

## FIG. 6

## FIG. 7

STRENGTH OF MATERIAL

DESIGN SPECIFICATION RANGE

MAXIMUM ALLOWABLE LENGTH $L_{max}$

LENGTH OF CUTOUT 34

## FIG. 8

## FIG. 9

FIG. 10

EP 2 149 690 A2

# FIG. 11

## FIG. 12

```
S201 ─ READ SHAPE OF BUTTED        DATABASE ON RELATIONSHIP        ─ S202
        PORTION (L₁, L₂, L₃)        BETWEEN PENETRATION DEPTH D AND
                                    AMOUNT OF HEAT INPUT Q, Q = f (D)

S203 ─ SELECT AMOUNT OF HEAT INPUT Q

S204 ─ INPUT HEAT IN WELDING

S206 ─ (2) LEAVE PART OF OUTER                    (1) LEAVE INNER CONTACT    ─ S205
        CONTACT FACE IN AXIAL                      FACE IN RADIAL DIRECTION
        DIRECTION
                                                  NOT FORM PENE-            ─ S207
                                                   TRATION BEADS

S212 ─ EXPAND MATERIAL                            NOT NEED INSPEC-     ─ S208
                                                   TION OF SHAPE            EFFECT 1:SHORTENING
                              S210                                           OF PROCESS TIME

S213 ─ COMPRESS OUTER CONTACT     SEAL CENTER     NOT NEED ANY              EFFECT 2:IMPROVEMENT OF
        FACE IN AXIAL DIRECTION    HOLE OF ROTOR   THROUGH HOLE              RELIABILITY OF STRENGTH
                                                                       ─ S209
S214 ─ INTERRUPT ROUTE FOR        EXPAND AIR REMAINING    ─ S211
        SPOUTING OF EXPANDED AIR   IN CENTER HOLE

                                  PREVENT SPOUTING    ─ S215    REDUCE FLAWS
                                   OF FIRST LAYER              OF WELDING
```

## FIG. 13

## FIG. 14

## FIG. 15

## FIG. 16

# FIG. 17

# FIG. 18

# FIG. 19

## FIG. 20

## FIG. 21

## FIG. 22

## FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000064805 A
- JP 9108883 A
- JP 2000186509 A
- JP 1833108 A
- JP 3106121 B

- JP 56014842 B
- JP 6078721 B
- JP 2005344527 A
- JP 2001123801 A

**Non-patent literature cited in the description**

- *Mitsubishi Heavy Industries Technical Review,* May 2000, vol. 37 (3

- *Fuji Electric Journal,* 2004, vol. 77 (2